# EUROPEAN PATENT APPLICATION

(11) **EP 3 817 295 A1**
(43) Date of publication of application: **05.05.2021**
(21) Application number: 20824052.3
(22) Date of filing: 12.02.2020
(51) Int. Cl.: H04L 12/24, H04L 12/46

(54) **LAYER-2 PRIVATE WIRE NETWORK SYSTEM AND CONFIGURATION METHOD**

(30) Priority: 04.09.2019 CN 201910832506
(71) Applicant: Xiamen Wangsu Co., Ltd., Xiamen, Fujian 361003 (CN)
(72) Inventor: The designation of the inventor has not yet been filed
(74) Representative: Würmser, Julian
(86) International application number: PCT/CN2020/074971
(87) International publication number: WO 2021/042675

(57) **Abstract**

The present disclosure discloses a layer-2 dedicated line network system and a configuration method. The layer-2 dedicated line network system includes a system switch and a POP server, wherein the system switch is connected to the POP server on the same side, and the POP servers on different sides are connected by a layer-2 tunnel, wherein each port of the POP server is assigned a link cost value, where the ports connecting the different layer-2 tunnel have different link cost values. At the same time, only one layer-2 tunnel is in a forwarding state, if the layer-2 tunnel in the forwarding state is unavailable, a target layer-2 tunnel is selected from the remaining available layer-2 tunnels in accordance with the assigned link cost value and the target layer-2 tunnel is set in the forwarding state.

## Description

### CROSS REFERENCE TO RELATED APPLICATIONS

The present disclosure refers to Chinese patent application No. 201910832506.1, entitled "Layer-2 Dedicated Line Network System and Configuration Method" and filed September 4, 2019, which is incorporated herein by reference in its entirety.

### TECHNICAL FIELD

The present disclosure relates to the field of Internet technologies, and in particular, to a layer-2 dedicated line network system and a configuration method.

### BACKGROUND

At present, the same enterprise may deploy data centers in different geographic locations. These data centers, which provide different services, often need to communicate with each other. Therefore, in the existing art, enterprises often need to establish a layer-2 dedicated line network between different geographic locations.

A line in the layer 2 dedicated line network may be a virtual line constructed by an intermediate network device and a tunneling technology. The devices at both ends of the virtual line are logically directly connected, which is equivalent to connecting the two devices through a physical network cable. In this way, a data message may be transmitted through the layer-2 dedicated line network without using a dynamic multicast routing protocol to construct a network that may forward a multicast message like a layer-3 network. However, in the current layer-2 dedicated line network, if a layer-2 tunnel configured to transmit the data message breaks down, the entire layer-2 dedicated line network may be unavailable. Therefore, it is currently desirable for a more stable layer-2 dedicated line network.

### SUMMARY

Some embodiments of the present disclosure are intended to provide a layer-2 dedicated line network system and a configuration method, which can improve the stability of the layer-2 dedicated line network.

In order to achieve the above objective, an aspect of the present disclosure provides a layer-2 dedicated line network system. The layer-2 dedicated line network system includes a system switch and a point of presence (POP) server. The system switch is connected to the POP server on the same side, and the POP servers on different sides are connected by a layer-2 tunnel. Each port of the POP server is assigned a link cost value, and the port connected to the different layer-2 tunnel has different link cost value. At the same time, only one layer-2 tunnel is in a forwarding state, if the layer-2 tunnel in the forwarding state is unavailable, a target layer-2 tunnel is selected from the remaining available layer-2 tunnels in accordance with the assigned link cost value and the target layer-2 tunnel is set in the forwarding state.

In order to achieve the above objective, another aspect of the present disclosure further provides a method for configuring a layer-2 dedicated line network. The layer-2 dedicated line network system includes a system switch and a POP server. The system switch is connected to the POP server on the same side, and the POP servers on different sides are connected by a layer-2 tunnel. The method includes: assigning a link cost value to each port of the POP server respectively, where the port connected to the different layer-2 tunnel has different link cost value; and only a layer-2 tunnel being in the forwarding state at the same time; selecting a target layer-2 tunnel from the remaining available layer-2 tunnels in accordance with the assigned link cost value when the layer-2 tunnel in the forwarding state is unavailable, and setting the target layer-2 tunnel in the forwarding state.

It can be seen from the above that in the technical solution provided by the present disclosure, multiple pop servers may be connected by multiple layer-2 tunnels. In order to ensure that the data message may not be transmitted repeatedly, each port of the POP server may be assigned different link cost value, so that each layer-2 tunnel has different link cost value. When transmitting the data message, only one layer-2 tunnel is in the forwarding state at the same time, and other layer-2 tunnels may be in a blocking state. If the layer-2 tunnel currently in the forwarding state is unavailable, a target layer-2 tunnel may be selected from the remaining available layer-2 tunnels, and the selected target layer-2 tunnel is set in the forwarding state, thus ensuring that the data message can be transmitted normally. Through the solution provided by the present disclosure, the data messages cannot be repeatedly forwarded, and the layer-2 tunnel can be flexibly switched, thereby improving the stability of the layer-2 dedicated line network.

### BRIEF DESCRIPTION OF THE DRAWINGS

In order to describe the technical solutions of the embodiments of the present disclosure more clearly, the drawings used in the description of the embodiments are briefly described below. It is obvious that the drawings descripted below are only some embodiments of the present disclosure. For those skilled in the art, further drawings may be obtained in accordance with these drawings without any creative effort.
FIG. 1 is a schematic diagram of a first structure of a layer-2 dedicated line network system in an embodiment of the present disclosure;
FIG. 2 is a schematic diagram of a second structure of a layer-2 dedicated line network system in an embodiment of the present disclosure.
FIG. 3 is a step diagram of a configuration method of a layer 2 dedicated line network in an embodiment of the present disclosure.

### DETAILED DESCRIPTION

In order to make the objective, the technical solution and the advantages of the present disclosure clearer, embodiments of the present disclosure are further described below in detail with reference to the accompanying drawings.

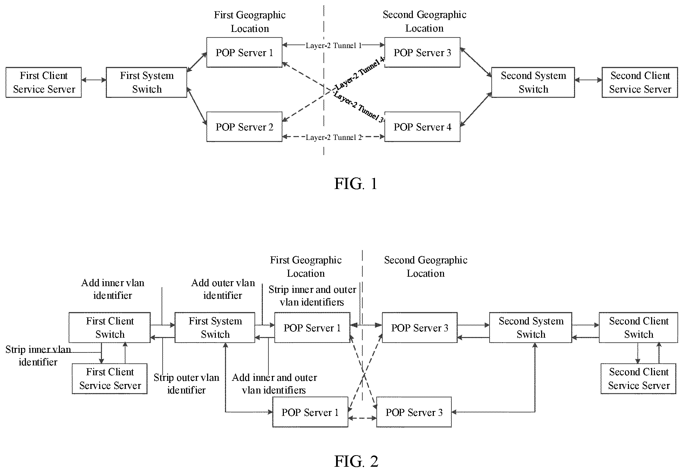

The present disclosure provides a layer-2 dedicated line network system. Referring to FIG. 1, the system may include a system switch and a POP server. Generally speaking, the layer-2 dedicated line network may be configured to transmit a data message between different client service servers belonging to the same client. These client service servers may be distributed in different geographic locations, such as in different cities, or in geographically distant locations in the same city. Correspondingly, the system switch and the POP server are deployed within the same geographic location of the client service servers. In the present disclosure, in order to improve the stability of the layer-2 dedicated line network, multiple layer-2 tunnels may be established between two geographic locations, which may be realized by deploying multiple POP servers respectively on both sides. The system switch may be connected to each POP server on the same side.

In practical applications, an OpenVirtualSwitch (OVS) or other software with similar functions may be run in each pop server. With the OVS or the other software with similar functions, the POP server may be configured to realize a layer-2 dedicated line network. Specifically, a communication protocol for implementing the layer-2 dedicated line network may be enabled on each POP server, and the communication protocol may be, for example, a spanning tree protocol (STP) or a rapid spanning tree protocol (RSTP). Through the enabled communication protocol, a priority may be set for the POP server, and a link cost value may be assigned to each port of the POP server.

In practical applications, the above-mentioned priority and the link cost value may be expressed in numerical values, where the smaller the numerical value configured to represent the priority, the higher the priority may be, while the smaller the numerical value configured to represent the link cost value, the smaller the link cost value may be. The assigned priority and link cost value may be configured to determine the port type of each port on the POP server. Specifically, different link cost values may be assigned for the ports connected to different layer-2 tunnels, while the ports on both sides of the same layer-2 tunnel may be assigned the same link cost value. For example, in FIG. 1, four layer-2 tunnels are established, then the four layer-2 tunnels may correspond to different four link cost values (e.g., 100, 110, 120 and 130 respectively), while for a layer-2 tunnel 1, two ports on its both sides may be configured with the link cost value of 100.

In an embodiment, a root bridge may be selected in accordance with the priority of each POP server. Specifically, the POP server with the highest priority may be taken as the root bridge. If there is a plurality of POP servers with the highest priority, the POP server with a smallest bridge ID may be taken as the root bridge. Here, the bridge ID may be a sum of the priority and a Media Access Control (MAC) address of the POP server. After the root bridge is selected, the port type of each port on the root bridge may be a designated port.

In this embodiment, after the root bridge is selected, the port type of each port on the other POP servers may be determined. Specifically, for the current POP server, a link cost value between each port and the root bridge may be determined, and the port with the smallest link cost value is taken as a root port. If there is a plurality of ports with the smallest link cost value, the port with the lowest port ID may be taken as the root port. The port ID may be the sum of the priority and port number of the POP server.

In this embodiment, after the root port on the POP server is determined, the designated port on the POP server may be determined. Specifically, for a communication link, if one of the two ports on both sides of the communication link is the root port, the other port may be taken as the designated port. If neither of the two ports on both sides of the communication link is the root port, one of the two ports may be selected as the designated port. In practical applications, within the two ports, the port with the smaller link cost value with the root bridge may be identified firstly, and the port with the smaller link cost value is taken as the designated port. However, if the link cost values are the same, the designated port may be determined in accordance with the priority of the POP server where the port is located. The port with the higher priority may be taken as the designated port. If the priorities are still the same, the designated port may be determined in accordance with the bridge ID of the POP server where the port is located. The port with the smallest bridge ID may be taken as the designated port.

In this way, the root port and the designated port may be determined on each POP server. For the root port and the designated port, the port state may be forwarding, and the port state of the rest ports may be blocking or discarding. For a target layer-2 tunnel, if the ports on both sides of the target layer-2 tunnel are both in a forwarding state, the target layer-2 tunnel is in the forwarding state. The data message may be transmitted normally through the target layer-2 tunnel. However, if any port of the target layer-2 tunnel is in the blocking state, the target layer-2 tunnel is in the blocking state. In the blocking state the data message may not be sent from one POP server through the layer-2 tunnel to another POP server. In this way, the plurality of layer-2 tunnels established between the POP servers on different sides can ensure that only one layer-2 tunnel is in the forwarding state at the same time after operating in the above-described manner, thus avoiding a repeated transmission of the data message through different layer-2 tunnels.

It should be noted that sometimes the communication sides of the layer-2 dedicated line network may be a symmetrical network structure, and then the priority of each POP server may be exactly the same at this time. In this case, the port type of each port may be determined by the link cost value and the MAC address without configuring the priority of each POP server.

In an embodiment, a port where a system switch is connected to a POP server may also be assigned a link cost value. In addition, in order to enable a data message sent by the system switch to reach each connected POP server normally, the link cost value of the port where the system switch is connected to the POP server may be set lower, while the link cost value of the port where the POP server is connected to the POP server on the opposite side may be set higher. In this way, for any POP server, the port connected to the system switch may have a lower link cost value than the port connected to the POP server on the opposite side. For example, in FIG. 1, the link cost value of the port where a POP server 1 is connected to the system switch may be 1, while the link cost value of a layer-2 tunnel 1 may be 100.

In this embodiment, if the POP server breaks down or the network environment fluctuates, causing the layer-2 tunnel currently in the forwarding state to be unavailable, a communication protocol running on the POP server may select a target layer-2 tunnel from the remaining available layer-2 tunnels in accordance with the assigned link cost value, and place the target layer-2 tunnel in the forwarding state, thus continuing to transmit the data message through the target layer-2 tunnel. Specifically, the layer-2 tunnel with the smallest link cost value may be selected from the remaining available layer-2 tunnels as the forgoing target layer-2 tunnel, so that the layer-2 tunnel currently in the forwarding state may be guaranteed to have the smallest link cost value among the available layer-2 tunnels all the time. The stability of data transmission may be improved through the switching method of the layer-2 tunnel.

In practical applications, the system switch usually comes with a MAC address learning function, which may automatically identify the MAC address in the data message and establish an association relationship between the identified MAC address and the port receiving the data message, thus constructing a MAC address forwarding table (forwarding database, fdb table). With the fdb table, the system switch may avoid sending the same data message to a plurality of different POP servers.

However, in this embodiment, since the layer-2 tunnel may be switched, if the system switch only forwards the data message to a connected POP server in accordance with the fdb table, the connected POP server may not be able to send the received data message to the POP server on the opposite side through the layer-2 tunnel.

For example, the layer-2 tunnel 1 in FIG. 1 breaks down and the system automatically switches to the layer-2 tunnel 2. At this time, if the system switch still sends the data message to the POP server 1 in accordance with the fdb table, the data message may not be transmitted to the opposite side. In view of this, in this embodiment, a MAC address learning function in the system switch may be turned off. In this way, when the system switch receives the data message, a destination MAC address in the data message may not be learned. Therefore, the system switch may forward the data message to each POP server connected to the system switch in a flood way, and then each POP server may try to forward the received data message through the layer-2 tunnel. According to the forgoing description, only one layer-2 tunnel is in the forwarding state at the same time. Therefore, only one copy of data message may be forwarded to the POP server on the opposite side, and other copies of data messages may not be sent to the POP server on the opposite side because the other layer-2 tunnel is in the blocking state, thus ensuring that the data message will not be transmitted repeatedly.

Referring to FIG. 1, in an embodiment, in a process of transmitting from a first client service server to a second client service server, a data message may pass through a first system switch, so the first system switch may receive the data message from the first client service server. In practical applications, the first system switch may be connected to a plurality of client service servers belonging to a first geographic location. Therefore, in order to distinguish the data messages sent by different client service servers, the first system switch may add an outer virtual local area network (vlan) identifier to the received data messages. The outer vlan identifier may be configured to characterize a client to whom the currently received data message belongs. In practical applications, a QinQ function (also called Stacked vlan or Double vlan function) may be pre-configured on a port connected to the first client service server on the first system switch, and different outer vlan identifiers may be pre-assigned for different client service servers on the first system switch. In this way, when the port receives the data message from the first client service server, it may add an outer vlan identifier matching with the first client service server to the data message.

In this embodiment, in order to forward the data message sent by the first client service server to the connected POP server 1 and POP server 2, the first system switch may configure the forgoing outer vlan identifier on a target port connected to the POP server 1 and POP server 2. In this way, from the perspective of the first system switch, the port connected to the first client service and the target port connected to the POP server 1 and the POP server 2 may be in the same vlan, so that the data message sent by the first client service server may finally be sent to the POP server 1 and the POP server 2 for processing. In addition, the first system switch may also configure the forgoing target port as a port type for retaining the outer vlan identifier, for example, it may be a trunk type. In this way, the first system switch may send the data message with the outer vlan identifier to the connected POP server 1 and POP server 2 through the target port.

In this embodiment, after receiving the data message with the outer vlan identifier, the pop server may determine the client to which the current data message belongs by identifying the outer vlan identifier, thereby determining the layer-2 tunnel for transmitting the data message. Thus, the pop server may assign corresponding layer-2 tunnels to different clients based on different outer vlan identifiers, which not only may realize data isolation between different clients and support a multi-client scenario, but also may realize a reuse of the POP server and save hardware cost. As shown in FIG. 1, the POP server 1 and the POP server 3 may be connected through the layer-2 tunnel 1. The data message transmitted on the layer-2 tunnel 1 usually need to be a pure Ethernet message. In view of this, after identifying the client to which the received data message belongs, the POP server 1 needs to strip the outer vlan identifier carried in the data message, so as to restore the Ethernet message sent by the first client service server. Finally, the restored Ethernet message may be sent to the POP server 3 through the pre-created layer-2 tunnel.

In an embodiment, a first interface corresponding to the outer vlan identifier may be pre-created in the POP server for receiving the data message with corresponding outer vlan identifier and for stripping the outer vlan identifier. In practical applications, the first interface may be created in multiple ways. For example, a multi-layer nested vlan interface may be created in a linux system, and the created multi-layer nested vlan interface is taken as the first interface described above. Specifically, please refer to the following application example:
ip link add eth0.200 link eth0 type vlan id 200

Here, eth0 may represent a physical adapter for receiving the data message. Then through the physical adapter, a virtual network adapter eth0.200 (i.e., the first interface for receiving the data message) may be created for the data message with an outer vlan identifier of 200, which is specifically configured to receive the data messages with the outer vlan identifier of 200. The virtual network adapter may be set with the same id as the outer vlan identifier, thus obtaining the virtual network adapter named eth0.200.

After receiving the data message with the outer vlan identifier, the physical adapter eth0 may strip the outer vlan identifier, and send the stripped data message to the virtual network adapter named eth0.200 after determining that the outer vlan identifier is 200, so that the stripping of the outer vlan identifier may be realized. At the same time, a first pop server obtains a mapping relationship between a source MAC address in the data message and the first interface through a self-learning capability of the forwarding database (fdb) table.

It is certain that, in practical applications, there may be other more ways to realize the function of stripping the outer vlan identifier. For example, when using an open virtual switch (ovs) software to create a target bridge, an openflow may also be added to the ovs bridge, and through the added openflow, a strip_vlan (for removing the vlan identifier in the data message) or other similar functions may be performed, thus realizing the stripping of the outer vlan identifier.

In this embodiment, the POP server 1 may have various implementations when creating a layer-2 tunnel connected to the POP server 3. For example, the POP server 1 may use a vxlan interface in the linux system to create a vxlan tunnel, and the vxlan tunnel may be taken as the created layer-2 tunnel. For another example, both the POP server 1 and the POP server 3 may both create an interface of type vxlan through the ovs. A transmission link formed by these two interfaces may be taken as the layer-2 tunnel. The forgoing vxlan interface created in the linux system or the interface of type vxlan in the ovs created by the POP server 1 may be taken as a second interface in the POP server 1 for connecting the layer-2 tunnels.

In this embodiment, in order to enable the data message, received by the POP server 1, to be transmitted to the POP server 3 through the layer-2 tunnel, the forgoing first interface and the second interface need to be bridged. Specifically, the POP server 1 may create a target bridge and take the forgoing first interface and the second interface as the two ports of the target bridge, thereby realizing the process of bridging the two interfaces. In practical applications, the target bridge may be created by the linux system, the ovs or other means, which is not limited in the present disclosure. Similarly, after the data message is forwarded through the second interface, the first POP server may obtain the mapping relationship between the source MAC address in the data message and the second interface through the self-learning capability of the fdb table.

In an embodiment of the present disclosure, considering that if in the same client a plurality of client service servers in different network segments all need to create a layer-2 dedicated line, or there are a plurality of client service servers belonging to different clients in a first geographic area, a plurality of communication lines need to be established between these client service servers and the first system switch, which undoubtedly increase the burden on the first system switch. In view of this, one or more client switches may be added between the first system switch and the client service server. For example, at least one client switch may be added for each client, and these client switches may be connected to the client service server and the first system switch respectively, where the client switches and the first switch are logically directly connected in the ports, for example, directly connected through a network cable or through a dedicated line connection.

Specifically, referring to FIG. 2, a client switch is taken as an example to illustrate the solution of the present disclosure. The first client switch may receive the data message sent by each client service server. In practical applications, different client service servers may be distributed into different network segments. In order to distinguish the data messages sent by the client service servers in different network segments, the first client switch may add an inner vlan identifier to the received data message and send it to the first system switch. The inner vlan identifier may be configured to characterize the network segment to which the client service server sending the data message belongs.

After passing through the first client switch, the data message carries the inner vlan identifier, and after being received by the first system switch, the data message may continue to add the outer vlan identifier in the manner described above. It should be noted that in this case, the first system switch may assign different outer vlan identifiers to client switches connected with each other, and add the outer vlan identifier matching with the current client switch to the data message sent by the current client switch. In this way, through a combination of the inner vlan identifier and the outer vlan identifier, a line channel for transmitting the data message may be uniquely determined, including the interface on the POP server and the corresponding layer-2 tunnel.

As shown in FIG. 2, the data message sent by the first client service server is a pure Ethernet message. The Ethernet message does not carry the inner vlan identifier or the outer vlan identifier. After passing through the first client switch, the inner vlan identifier with id 400 may be added, and after passing through the first system switch, the outer vlan identifier with id 200 may be added subsequently.

It is certain that if the client service servers connected to the first client switch are all in the same vlan, the first client switch may not add the inner vlan identifier, so that the first client switch may send the data message from the client service server to the first system switch directly.

In an embodiment, if the data message forwarded by the first system switch carries both the inner vlan identifier and the outer vlan identifier, the POP server also needs to have the function of stripping the inner vlan identifier and the outer vlan identifier. Specifically, the POP server may still add the openflow to the ovs in the above-described manner, and perform the strip_vlan or similar functions through the added openflow, thus realizing the function of stripping the inner and outer vlan identifiers. In addition, the POP server may also create the multi-layer nested vlan interface in the linux system, and realize the function of stripping the inner and outer vlan identifiers through the created multi-layer nested vlan interface. Specifically, please refer to the following application examples:
ip link add eth0.200 link eth0 type vlan id 200
ip link add eth0.200.400 link eth0.200 type vlan id 400

It can be seen that according to the outer vlan identifier 200 to be stripped, a first virtual network adapter eth0.200, i.e., a first virtual network interface for receiving the data message, may be created for the data message carrying the outer vlan identifier 200 through a physical adapter eth0. According to the inner vlan identifier 400 to be stripped, a second virtual network adapter eth0.200.400, i.e., a second virtual network interface for receiving the data message, is created for the data message carrying the inner vlan identifier 400 through the first virtual network adapter eth0.200.

In this way, the data message received by the physical adapter may be received by the first virtual network adapter after being stripped of the outer vlan identifier, and the data message received by the first virtual network adapter may be received by the second virtual network adapter after being stripped of the inner vlan identifier, thus realizing the process of stripping of the inner and outer vlan identifiers. Meanwhile, after receiving the data message, the virtual network interface of the POP server may obtain the mapping relationship between the source mac address in the data message and each virtual network interface through the self-learning capability of the fdb table.

It can be seen from the above that the POP server may receive the data message with the outer vlan identifier and the inner vlan identifier, strip the outer vlan identifier and the inner vlan identifier, finally restore the Ethernet message sent by the client service server, and send the Ethernet message to another POP server through the layer-2 tunnel. In addition, the virtual network interface created in the POP server may also have the function of stripping the inner vlan identifier, and the second virtual network interface still needs to be bridged with the second interface, so that the data message of the client service server may be transmitted through the layer-2 tunnel.

In this embodiment, each device deployed at a second geographic location in FIGs. 1 and 2 may perform the same function as each corresponding device at the first geographic location when processing the data message sent by the second client service server, which is not described here again. It should be noted that although the devices at the first geographic location and the devices at the second geographic location perform the same functions, it does not mean that the devices on both sides need to adopt the exactly same configuration. For example, the inner vlan identifier added by the first client switch may be different from the inner vlan identifier added by the second client switch, and the outer vlan identifier added by the first system switch may be different from the outer vlan identifier added by the second system switch.

When the POP server 1 receives the data message sent by the POP server 3, the data message is the pure Ethernet message. At this time, the POP server 1 may perform an operation opposite to the forgoing process, that is, add the outer vlan identifier to the received data message, send the data message added with the outer vlan identifier to the first system switch. Subsequently, the first system switch may strip the outer vlan identifier off the received data message and feedback to the first client service server.

If there is the first client switch between the first system switch and the first client service server, the POP server 1 may continue to add the outer vlan identifier to the received data message after adding the inner vlan identifier to the received data message, and send the data message added with the outer vlan identifier and the inner vlan identifier to the first system switch. In this way, the first system switch may send the data message with the inner vlan identifier to the first client switch after striping the outer vlan identifier. After receiving the data message stripped of the outer vlan identifier, if the data message carries the inner vlan identifier, the first client switch may strip the inner vlan identifier off the received data message and provide the restored Ethernet message to the first client service server.

The forgoing specific implementation of adding and stripping the vlan identifiers described above may be implemented by the linux system or the ovs or other similar manners with reference to the description in the previous embodiments, which is not described here again. In a practical application, the interface for forwarding the data message may be determined based on the fdb table, and when the data message reaches the corresponding interface, the corresponding vlan identifier is added, thus not only adding the corresponding identifier to the data message, but also ensuring that the transmission path of the data message sent to the client service server is the same as that of the data message sent from the client service server, thus enabling the data message to reach the client service server smoothly.

It should be noted that after receiving the Ethernet message sent by the POP server 1, the POP server 3 may process the Ethernet message in a way similar to the forgoing manner. For example, in FIG. 2, the POP server 3 may add an outer vlan identifier with id 300 and an inner vlan identifier with id 500 to the received Ethernet message, the second system switch may strip the outer vlan identifier with id 300, and the second client switch may strip the inner vlan identifier with id 500.

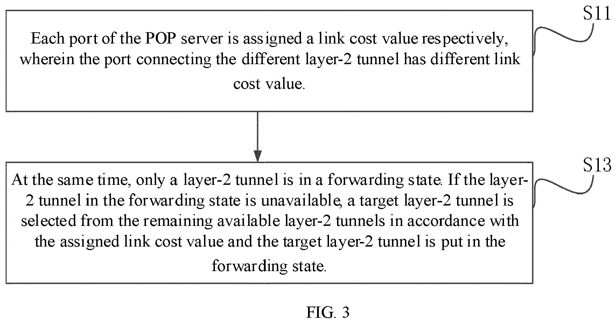

The present disclosure further provides a method for configuring a layer-2 dedicated line network. Referring to FIG. 3, the method includes the following steps.

In S11, each port of the POP server is assigned a link cost value respectively, where the ports connected to the different layer-2 tunnel have different link cost values.

In S13, at the same time, only one layer-2 tunnel is in a forwarding state. If the layer-2 tunnel in the forwarding state is unavailable, a target layer-2 tunnel is selected from the remaining available layer-2 tunnels in accordance with the assigned link cost value and the target layer-2 tunnel is set in the forwarding state.

It can be seen from the above that in the technical solution provided by the present disclosure, multiple pop servers may be connected by multiple layer-2 tunnels. In order to ensure that the data message is not transmitted repeatedly, each port of the POP server may be assigned different link cost values, so that each layer-2 tunnel has different link cost value. When transmitting the data message, only one layer-2 tunnel is in the forwarding state at the same time, and other layer-2 tunnels may be in the blocking state. If the layer-2 tunnel currently in the forwarding state is unavailable, the target layer-2 tunnel may be selected from the remaining available layer-2 tunnels, and the selected target layer-2 tunnel is set in the forwarding state, thus ensuring that the data message can be transmitted normally. Through the solution provided by the present disclosure, the data messages cannot be repeatedly forwarded, and the layer-2 tunnel can be flexibly switched, thereby improving the stability of the layer-2 dedicated line network.

Each embodiment in this specification is described in a progressive manner, and the same or similar parts between the various embodiments may be referred to each other. Each embodiment focuses on the differences from other embodiments. In particular, for the embodiments of the method, an explanation may be made with reference to the introduction of the embodiments of the aforementioned system.

From the description of the above embodiments, those skilled in the art may clearly understand that each embodiment may be implemented by means of a software plus a necessary general hardware platform, and of course, may further be implemented by means of a hardware. Based on such understanding, the essence of the forgoing technical solution or the part contributing to the existing technology may be embodied in the form of a software product. The computer software product may be stored in a computer readable storage medium such as a ROM/RAM, a magnetic disk, an optical disk or the like, and includes several instructions to cause a computer device (which may be a personal computer, a server, or a network device, etc.) to execute the methods described in various embodiments or some parts of the embodiments.

The forgoing description is only preferred embodiments of the present disclosure, and is not intended to limit the present disclosure. Any modifications, equivalent substitutions, improvements or the like made within the spirit and principles of the present disclosure are included in the scope of protection of the present disclosure.

## Claims

1. A layer-2 dedicated line network system, wherein the layer-2 dedicated line network system comprises system switches and POP servers, a system switch on a side of layer-2 tunnels is connected to a plurality of POP servers, and the POP servers on different sides are connected by a layer-2 tunnel, wherein,
each port of a respective POP server is assigned a link cost value, wherein ports connected to different layer-2 tunnels have different link cost values; and
at a same time, only one layer-2 tunnel is in a forwarding state, when the layer-2 tunnel in the forwarding state is unavailable, a target layer-2 tunnel is selected from remaining available layer-2 tunnels in accordance with the assigned link cost value and the target layer-2 tunnel is set in the forwarding state.

2. The layer-2 dedicated line network system in accordance with claim 1, wherein for any POP server, a port connected to the system switch has a lower link cost value than an other port connected to the corresponding POP server on the other side of the layer-2 tunnels.

3. The layer-2 dedicated line network system in accordance with claim 1, wherein each of the POP servers is further assigned a priority, the priority is configured to determine a port type of each port in the POP server, the port type is configured to determine a port state, and the port state comprises the forwarding state or a blocking state, wherein when the ports on both sides of the target layer-2 tunnel are in the forwarding state, the target layer-2 tunnel is in the forwarding state; and when any port of the target layer-2 tunnel is in the blocking state, the target layer-2 tunnel is in the blocking state.

4. The layer-2 dedicated line network system in accordance with claim 1, wherein the layer-2 tunnel with the lowest link cost value is selected as the target layer-2 tunnel from the remaining available layer-2 tunnels.

5. The layer-2 dedicated line network system in accordance with claim 1, wherein a MAC address learning function in the system switch is turned off, so that when the system switch receives a data message, if a destination MAC address in the data message is not learned by the system switch, the data message is forwarded to each POP server connected to the system switch.

6. The layer-2 dedicated line network system in accordance with claim 1, wherein the system switch is further configured to receive the data message from a client service server and add an outer virtual local area network identifier to the data message, and the outer virtual local area network identifier is configured to characterize a client to which the data message belongs; on the system switch a target port connected to the POP server is configured with the outer virtual local area network identifier, and the target port is configured as a port type retaining the outer virtual local area network identifier, so that the system switch sends the data message with the outer virtual local area network identifier to the connected POP server through the target port; and
the POP server is further configured to receive the data message with the outer virtual local area network identifier, and strip the outer virtual local area network identifier to restore the data message sent by the client service server, and send the restored data message to a corresponding POP server on an other side of a layer-2 tunnel through the layer-2 tunnel.

7. The layer-2 dedicated line network system in accordance with claim 6, wherein the layer-2 dedicated line network system further comprises a client switch, the client switch is connected to the client service server and the system switch respectively, the client switch is configured to receive the data message sent by each client service server, and to add an inner virtual local area network identifier to the received data messages when the client service server is divided into different network segments, wherein the inner virtual local area network identifier is configured to characterize the network segment to which the received data message belongs; the client switch is further configured to send the data message sent by the client service server or the data message with the inner virtual local area network identifier to the connected system switch.

8. The layer-2 dedicated line network system in accordance with claim 7, wherein the system switch is further configured to assign different outer virtual local area network identifiers for each connected client switch, and add an outer virtual local area network identifier matching with a current client switch to the data message sent by the current client switch; the POP server is further configured to receive the data message with the outer virtual local area network identifier and the inner virtual local area network identifier, and strip the outer virtual local area network identifier and the inner virtual local area network identifier.

9. The layer-2 dedicated line network system in accordance with any one of claims 6 to 8, wherein a first interface for striping the outer virtual local area network identifier and the inner virtual local area network identifier and a second interface for connecting the layer-2 tunnel are pre-created in the POP server, wherein the first interface and the second interface are bridged.

10. The layer-2 dedicated line network system in accordance with claim 9, wherein the POP server is configured to, when creating the first interface, create a first virtual network adapter with the outer virtual local area network identifier through a physical adapter in accordance with the outer virtual local area network identifier to be stripped, and create a second virtual network adapter with the inner virtual local area network identifier through the first virtual network adapter in accordance with the inner virtual local area network identifier to be stripped; wherein after the data message received by the physical adapter is stripped of the outer virtual local area network identifier, the data message is received by the first virtual network adapter; and after the data message received by the first virtual network adapter is stripped of the inner virtual local area network identifier, the data message is received by the second virtual network adapter.

11. The layer-2 dedicated line network system in accordance with claim 6, wherein the POP server is further configured to receive the data message sent by the corresponding POP server on the other side of the layer-2 tunnel, and add the outer virtual local area network identifier to the received data message, and send the data message with the outer virtual local area network identifier to the connected system switch, wherein the system switch is configured to strip the outer virtual local area network identifier off the received data message and then feed the stripped data message back to the client service server.

12. The layer-2 dedicated line network system in accordance with claim 11, wherein the POP server is further configured to add an inner virtual local area network identifier to the received data message and send the data message with the outer virtual local area network identifier and the inner virtual local area network identifier to the connected system switch; and
the layer-2 dedicated line network system further comprises a client switch, wherein the client switch is connected to the client service server and the system switch respectively; the client switch is configured to receive the data message stripped off the outer virtual local area network identifier sent by the connected system switch; and , the client switch is further configured to, when the data message received by the client switch carries the inner virtual local area network identifier, strip the inner virtual local area network identifier off the received data message and then provide the stripped data message to the connected client service server.

13. A method for configuring a layer-2 dedicated line network system, wherein the layer-2 dedicated line network system comprises system switches and POP servers, a system switch on a side of layer-2 tunnels is connected to a plurality of POP servers, and the POP servers on different sides are connected by a layer-2 tunnel; the method comprises:
assigning a link cost value to each port of the POP server respectively, wherein the ports connected to different layer-2 tunnels have different link cost values; and
only one layer-2 tunnel being in the forwarding state at the same time, selecting a target layer-2 tunnel from the remaining available layer-2 tunnels in accordance with the assigned link cost value when the layer-2 tunnel in the forwarding state is unavailable, and putting the target layer-2 tunnel in the forwarding state.
